(19) Europäisches Patentamt
European Patent Office
Office européen des brevets

(11) EP 3 548 576 B1

(12) # EUROPEAN PATENT SPECIFICATION

(45) Date of publication and mention of the grant of the patent:
**04.11.2020 Bulletin 2020/45**

(21) Application number: **17804214.9**

(22) Date of filing: **30.11.2017**

(51) Int Cl.:
***C09D 183/14*** $^{(2006.01)}$ ***C09D 183/16*** $^{(2006.01)}$

(86) International application number:
**PCT/EP2017/080909**

(87) International publication number:
**WO 2018/100027 (07.06.2018 Gazette 2018/23)**

(54) **CROSSLINKABLE POLYMER COMPOSITION WITH CURING CATALYST**

VERNETZBARE POLYMERZUSAMMENSETZUNG MIT HÄRTUNGSKATALYSATOR

COMPOSITION DE POLYMÈRE RÉTICULABLE COMPRENANT UN CATALYSEUR DE DURCISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2016 EP 16201982**

(43) Date of publication of application:
**09.10.2019 Bulletin 2019/41**

(73) Proprietor: **Merck Patent GmbH**
**64293 Darmstadt (DE)**

(72) Inventors:
- **GROTTENMUELLER, Ralf**
  **65199 Wiesbaden (DE)**
- **GARCIA-MINGUILLAN, Abraham Casas**
  **65183 Wiesbaden (DE)**
- **KITA, Fumio**
  **65185 Wiesbaden (DE)**
- **NOJIMA, Yoshio**
  **Iwata-shi**
  **Shizuoka 437-1201 (JP)**
- **ENDO, Hironori**
  **Isehara-shi**
  **Kanagawa 259-1114 (JP)**
- **KOBAYASHI, Masakazu**
  **Kakegawa-shi**
  **Shizuoka 436-0054 (JP)**

(56) References cited:
**WO-A2-2007/028511 US-A1- 2015 030 856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 548 576 B1

## Description

### Technical field

The present invention relates to a crosslinkable polymer formulation comprising a polymer with a silazane repeating unit and a specific boron Lewis acid curing catalyst, wherein the curing catalyst catalyzes the crosslinking of the polymer in the crosslinkable polymer composition to obtain a crosslinked polymer composition. Said crosslinked polymer composition is particularly suitable as a technical coating on articles for industrial and household applications. The boron Lewis acid curing catalyst allows the crosslinking of polymers having silazane repeating units to prepare crosslinked silazane based polymer compositions which do not show any discoloration or material deterioration and are therefore particularly suitable as technical coatings for industrial and household applications. The present invention further relates to a method for preparing such a crosslinkable polymer formulation, a method for crosslinking said crosslinkable polymer formulation and a crosslinked polymer composition obtainable by said method. Moreover, the present invention relates to an article comprising the crosslinked polymer composition as a technical coating. The boron Lewis acid curing catalyst which is contained in the crosslinkable polymer formulation allows a more efficient crosslinking of the crosslinkable polymer formulation. In particular, the crosslinking is much faster, even at moderate temperatures of less than 220°C, and the crosslinked polymer composition does not show any undesired discoloration or other material deterioration when exposed to heat. Thus, the crosslinked polymer composition is of very high purity and therefore particularly suitable as technical coating on articles for industrial and household applications.

### Background of the invention

Polymers which contain a silazane repeating unit are typically referred to as polysilazanes or polysiloxazanes. While polysilazanes are composed of one or more different silazane repeating units, polysiloxazanes additionally contain one or more different siloxane repeating units. Polysilazanes and polysiloxazanes are usually liquid polymers which become solid at molecular weights of ca. > 10.000 g/mol. In most applications liquid polymers of moderate molecular weights, typically in the range from 2.000 to 8.000 g/mol, are used. For preparing a solid coating from such liquid polymers, a curing step is required which is carried out after applying the material on a substrate, either as a pure material or as a formulation. Polysilazanes or polysiloxazanes are crosslinked by a hydrolysis reaction, wherein moisture from the air reacts according to the mechanisms as shown by Equations (I) and (II) below:

Equation (I): Hydrolysis of Si-N bond

$$R_3Si\text{-}NH\text{-}SiR_3 + H_2O \rightarrow R_3Si\text{-}O\text{-}SiR_3 + NH_3$$

Equation (II): Hydrolysis of Si-H bond

$$R_3Si\text{-}H + H\text{-}SiR_3 + H_2O \rightarrow R_3Si\text{-}O\text{-}SiR_3 + 2H_2$$

During the hydrolysis reactions the polymers crosslink and the increasing molecular weight leads to a solidification of the material. Hence, the crosslinking reactions lead to a curing of the polysilazane or polysiloxazane material. For this reason, in the present application the terms "curing" and "crosslinking" and the corresponding verbs "cure" and "crosslink" are interchangeably used as synonyms when referred to silazane based polymers such as e.g. polysilazanes and polysiloxazanes.

Usually, curing is performed by hydrolysis at ambient conditions or at elevated temperatures of up to 220°C or more. The curing time should be as low as possible.

Various catalysts have been described in the state of the art to catalyze the crosslinking process of polysilazanes under thermal conditions:

WO 2007/028511 A2 relates to the use of polysilazanes as permanent coating on metal and polymer surfaces for preventing corrosion, increasing scratch resistance and to facilitate easier cleaning. Catalysts such as e.g. organic amines, organic acids, metals and metal salts may be used for curing the polysilazane formulation to obtain a permanent coating. Depending on the polysilazane formulation used and catalyst, curing takes place even at room temperature,

but can be accelerated by heating.

Similarly, N-heterocyclic compounds, organic or inorganic acids, metal carboxylates, fine metal particles, peroxides, metal chlorides or organometallic compounds are suggested in WO 2004/039904 A1 for curing a polysilazane formulation under thermal conditions.

The coatings produced with the aforementioned methods require a relatively long curing time. Owing to the low film thickness, void formation is quite high and the barrier action of the coatings is unsatisfactory. Hence, there is a strong need to accelerate the crosslinking of polymers containing silazane repeating units, such as e.g. polysilazanes and polysiloxazanes, especially at ambient conditions, and to improve the material properties of the crosslinked polymer coatings.

Depending on the type of application, it is sometimes possible to use higher temperatures for curing, such as e.g. 220°C or above. However, there are applications which do not tolerate high temperatures, or it is simply not possible to apply heat. Examples of such applications are the coating of railcars or subway trains or the coating of building facades in order to apply a protective layer against dirt and graffiti. In addition, elevated temperatures may be excluded due to the nature of the substrate to be coated. For example, most plastics start to degrade and decompose at temperatures of above 100°C. Until now, however, the curing of pure liquid polysilazanes or polysiloxazanes at ambient conditions is a rather slow process. Depending on the chemical composition, it might take several days to completely crosslink a polysilazane or polysiloxazane based coating.

In order to address this problem, various methods have been developed in which the curing takes place with the aid of VUV and/or UV radiation. For example, WO 2007/012392 A2 describes a method for producing a glassy, transparent coating on a substrate by (i) coating the substrate with a solution containing a polysilazane and a nitrogen-based basic catalyst in an organic solvent, (ii) removing the solvent using evaporation such that a polysilazane layer having a layer thickness of 0.05-3.0 $\mu$m remains on the substrate, and (iii) irradiating the polysilazane layer with VUV and UV radiation in an atmosphere containing steam and oxygen.

However, when using VUV radiation with wavelengths of < 200 nm for curing, a nitrogen atmosphere is needed to avoid unfavorable absorption by oxygen taking place, for example, when using a Xenon Excimer Laser emitting at 172 nm. Likewise, when using UV radiation with wavelengths of < 300 nm for curing, energy is lost by absorption of the polymer which results in the penetration depth being only some 100 nm which is not sufficient. When using UV radiation with wavelengths of > 300 nm in a range where the polymer does not absorb, an UV active catalyst is required to promote a reaction between the reactive groups of the polymer, such as e.g. a UV radical starter initiating the $Si\text{-}H/Si\text{-}CH{=}CH_2$ addition.

It is well known in the art to use amine bases as catalysts for the crosslinking of polysilazanes under thermal conditions or under VUV and/or UV irradiation. Amine bases convert $H_2O$ (which is present as moisture) into $OH^-$ which attacks the silicon atom much faster than $H_2O$ does. However, at higher temperatures (> 200°C) amines tend to get yellow and are therefore not suitable for applications where optical clarity of the crosslinked polymer composition is needed.

For this reason, there is a strong need to find a way to accelerate the crosslinking of polymers containing silazane repeating units such as polysilazanes and polysiloxazanes, especially at moderate temperature conditions of preferably less than 220°C. This allows a resource-saving and sustainable process which provides a cost advantage when compared to conventional crosslinking processes. Moreover, there is a need to avoid yellow discoloration and other material deterioration of crosslinked polymer compositions which are obtained from crosslinkable polymers with silazane repeating units such as polysilazanes and polysiloxazanes.

US 2015/030856 A1 discloses compositions for coatings designated as boron-modified silazanes or 'polyborosilazanes', derived from the mixing of a polysilazane and trimethyl borate.

The present inventors have found that specific boron Lewis acid compounds may be used as highly efficient catalysts for the curing of polymers containing silazane repeating units such as polysilazanes and/or polysiloxazanes. It is assumed that the boron Lewis acid catalysts activate the Si-N bonds which are contained in the polymer's backbone.

**Technical problem and object of the invention**

Various amine bases for the curing of silazane containing polymers have been proposed in the state of the art so far. However, there is a continuing need to accelerate the curing of silazane based polymers such as polysilazanes and polysiloxazanes and to enable an efficient crosslinking which may take place at moderate temperatures of preferably less than 220°C. Moreover, there is a need for new crosslinkable polymer formulations including silazane based polymers such as polysilazanes and/or polysiloxazanes which give crosslinked polymer compositions that do not suffer from yellow discoloration or other material deterioration when exposed to heat.

It is therefore an aim of the present invention to overcome the disadvantages in the prior art and to provide new crosslinkable polymer formulations based on polymers with silazane groups such as e.g. polysilazanes and/or polysiloxazanes which allow a fast and efficient curing process even at moderate temperatures such as preferably of

less than 220°C. It is a further object of the present invention to provide new crosslinkable silazane based polymer formulations which give crosslinked polymer compositions that do not show any discoloration or other material deterioration when exposed to heat. It is a further object of the present invention to provide a method for preparing a crosslinkable polymer formulation for the above-mentioned purposes. Moreover, it is an object of the present invention to provide a method for crosslinking said crosslinkable polymer formulation in a quick and efficient way and to provide a crosslinked polymer composition which is obtainable by said method. Beyond that, it is an aim of the present invention to provide an article comprising the crosslinked polymer formulation as a technical coating.

The crosslinkable polymer formulation shows a higher curing rate when compared to conventional polymer formulations and thereby allows a more efficient processability. Moreover, the crosslinked polymer composition does not show any discoloration when exposed to heat such as e.g. temperatures of > 220°C.

## Summary of the invention

The present inventors have surprisingly found that the above objects can be solved either individually or in any combination by a formulation comprising a polymer containing a silazane repeating unit $M^1$; and a curing catalyst, wherein the curing catalyst is represented by formula (1): $ML_3$ (formula (1)), wherein M is boron; and L may be the same or different at each occurrence and is selected independently from the group consisting of hydrogen, straight-chain alkyl having 1 to 20 carbon atoms, straight-chain alkenyl having 2 to 20 carbon atoms, branched-chain alkyl or alkenyl having 3 to 20 carbon atoms, cyclic alkyl or alkenyl having 3 to 20 carbon atoms, and aryl or heteroaryl having 4 to 18 carbon atoms, wherein one or more hydrogen atoms may be optionally replaced by F.

In addition, a method for preparing a formulation according to the invention is provided, wherein the polymer containing a silazane repeating unit $M^1$ is mixed with the curing catalyst.

Furthermore, a method for crosslinking the crosslinkable polymer formulation is provided comprising the following steps:

(a) providing a crosslinkable polymer formulation according to the present invention; and
(b) curing said crosslinkable polymer formulation.

Moreover, a crosslinked polymer composition is provided which is obtainable by the above-mentioned method for crosslinking the crosslinkable polymer formulation.

The present invention further relates to an article comprising said crosslinked polymer composition as a technical coating.

Preferred embodiments of the invention are described in the dependent claims.

## Brief description of the figures

Figure 1 shows FT-IR spectra of Example 1:

——— Durazane 1033, no heat treatment (raw material as reference)

- - - - - Durazane 1033, no catalyst, 8 h at 150°C and 8 h at 220°C

__ __ __ Durazane 1033, triphenylborane, 8 h at 150°C

- · - · - · Durazane 1033, triphenylborane, 8 h at 150°C and 8 h at 220°C

## Detailed description of the invention

### Definitions

The term "crosslinkable polymer formulation" refers to a formulation comprising at least one crosslinkable polymer compound. A "crosslinkable polymer compound" is a polymer compound which may be crosslinked thermally, by the influence of radiation and/or a catalyst. A crosslinking reaction involves sites or groups on existing polymers or an interaction between existing polymers that results in the formation of a small region in a polymer from which at least three chains emanate. Said small region may be an atom, a group of atoms, or a number of branch points connected by bonds, groups of atoms or oligomeric or polymeric chains.

The term "polymer" includes, but is not limited to, homopolymers, copolymers, for example, block, random, and alternating copolymers, terpolymers, quaterpolymers, etc., and blends and modifications thereof. Furthermore, unless otherwise specifically limited, the term "polymer" shall include all possible configurational isomers of the material. These configurations include, but are not limited to isotactic, syndiotactic, and atactic symmetries. A polymer is a molecule of high relative molecular mass, the structure of which essentially comprises the multiple repetition of units (i.e. repeating

units) derived, actually or conceptually, from molecules of low relative mass (i.e. monomers).

The term "monomer" as used herein refers to a molecule which can undergo polymerization thereby contributing constitutional units (repeating units) to the essential structure of a polymer.

The term "homopolymer" as used herein stands for a polymer derived from one species of (real, implicit or hypothetical) monomer.

The term "copolymer" as used herein generally means any polymer derived from more than one species of monomer, wherein the polymer contains more than one species of corresponding repeating unit. In one embodiment the copolymer is the reaction product of two or more species of monomer and thus comprises two or more species of corresponding repeating unit. It is preferred that the copolymer comprises two, three, four, five or six species of repeating unit. Copolymers that are obtained by copolymerization of three monomer species can also be referred to as terpolymers. Copolymers that are obtained by copolymerization of four monomer species can also be referred to as quaterpolymers. Copolymers may be present as block, random, and/or alternating copolymers.

The term "block copolymer" as used herein stands for a copolymer, wherein adjacent blocks are constitutionally different, i.e. adjacent blocks comprise repeating units derived from different species of monomer or from the same species of monomer but with a different composition or sequence distribution of repeating units.

Further, the term "random copolymer" as used herein refers to a polymer formed of macromolecules in which the probability of finding a given repeating unit at any given site in the chain is independent of the nature of the adjacent repeating units. Usually, in a random copolymer, the sequence distribution of repeating units follows Bernoullian statistics.

The term "alternating copolymer" as used herein stands for a copolymer consisting of macromolecules comprising two species of repeating units in alternating sequence.

The term "polysilazane" as used herein refers to a polymer in which silicon and nitrogen atoms alternate to form the basic backbone. Since each silicon atom is bound to at least one nitrogen atom and each nitrogen atom to at least one silicon atom, both chains and rings of the general formula $[R^1R^2Si\text{-}NR^3]_m$ occur, wherein $R^1$ to $R^3$ can be hydrogen atoms or organic substituents; and m is an integer. If all substituents $R^1$ to $R^3$ are H atoms, the polymer is designated as perhydropolysilazane, polyperhydrosilazane or inorganic polysilazane ($[H_2Si\text{-}NH]_m$). If at least one substituent $R^1$ to $R^3$ is an organic substituent, the polymer is designated as organopolysilazane.

The term "polysiloxazane" as used herein refers to a polysilazane which additionally contains sections in which silicon and oxygen atoms alternate. Such section may be represented for example by $[O\text{-}SiR^4R^5]_n$, wherein $R^4$ and $R^5$ can be hydrogen atoms or organic substituents; and n is an integer. If all substituents of the polymer are H atoms, the polymer is designated as perhydropolysiloxazane. If at least one substituents of the polymer is an organic substituent, the polymer is designated as organopolysiloxazane.

The term "Lewis acid" as used herein means a molecular entity (and the corresponding chemical species) that is an electron-pair acceptor and therefore able to react with a Lewis base to form a Lewis adduct, by sharing the electron pair furnished by the Lewis base. A "Lewis base" as used herein is a molecular entity (and the corresponding chemical species) that is able to provide a pair of electrons and thus capable of coordination to a Lewis acid, thereby forming a Lewis adduct. A "Lewis adduct" is an adduct formed between a Lewis acid and a Lewis base.

The term "technical coating" as used herein refers to coatings in industrial and household areas, except the electronic, optoelectronic and semiconductor industry. Examples for "technical coatings" are in automobiles, construction or architectural areas. Generally, the coatings are needed to protect surfaces or impart special effects to surfaces. There are various effects which are imparted by organopolysil(ox)azane based coatings. For example anti-graffiti, scratch resistance, mechanical resistance, chemical resistance, hydro- and oleophobicity, hardness, light and temperature fastness, optical effects, antimicrobial, (non)conductive, (non)magnetic and corrosion resistance. A technical coating may comprise one or more layers.

It is noted that the terms "layer" and "layers" are used interchangeably throughout the application. A person of ordinary skill in the art will understand that a single "layer" of material may actually comprise several individual sub-layers of material. Likewise, several "sub-layers" of material may be considered functionally as a single layer. In other words the term "layer" does not denote a homogenous layer of material. A single "layer" may contain various material concentrations and compositions that are localized in sub-layers. These sub-layers may be formed in a single formation step or in multiple steps. Unless specifically stated otherwise, it is not intended to limit the scope of the invention as embodied in the claims by describing an element as comprising a "layer" or "layers" of material.

For the purposes of the present application the term "organyl" is used to denote any organic substituent group, regardless of functional type, having one free valence at a carbon atom.

For the purposes of the present application the term "organoheteryl" is used to denote any univalent group containing carbon, which is thus organic, but which has the free valence at an atom other than carbon being a heteroatom.

As used herein, the term "heteroatom" will be understood to mean an atom in an organic compound that is not a H- or C-atom, and preferably will be understood to mean N, O, S, P, Si, Se, As, Te or Ge.

An organyl or organoheteryl group comprising a chain of 3 or more C atoms may be straight-chain, branched-chain and/or cyclic, including spiro and/or fused rings.

Preferred organyl and organoheteryl groups include alkyl, alkoxy, alkylsilyl, alkylsilyloxy, alkylcarbonyl, alkoxycarbonyl, alkylcarbonyloxy and alkoxycarbonyloxy, each of which is optionally substituted and has 1 to 40, preferably 1 to 25, more preferably 1 to 18 C atoms, furthermore optionally substituted aryl, aryloxy, arylsilyl or arylsilyloxy having 6 to 40, preferably 6 to 25 C atoms, furthermore alkylaryloxy, alkylarylsilyl, alkylarylsilyloxy, arylalkylsilyl, arylalkylsilyloxy, arylcarbonyl, aryloxycarbonyl, arylcarbonyloxy and aryloxycarbonyloxy, each of which is optionally substituted and has 7 to 40, preferably 7 to 20 C atoms, wherein all these groups do optionally contain one or more heteroatoms, preferably selected from N, O, S, P, Si, Se, As, Te and Ge.

The organyl or organoheteryl group may be a saturated or unsaturated acyclic group, or a saturated or unsaturated cyclic group. Unsaturated acyclic or cyclic groups are preferred, especially aryl, alkenyl and alkynyl groups (especially ethynyl). Where the $C_1$-$C_{40}$ organyl or organoheteryl group is acyclic, the group may be straight-chain or branched-chain. The $C_1$-$C_{40}$ organyl or organoheteryl group includes for example: a $C_1$-$C_{40}$ alkyl group, a $C_1$-$C_{40}$ fluoroalkyl group, a $C_1$-$C_{40}$ alkoxy or oxaalkyl group, a $C_2$-$C_{40}$ alkenyl group, a $C_2$-$C_{40}$ alkynyl group, a $C_3$-$C_{40}$ allyl group, a $C_4$-$C_{40}$ alkyldienyl group, a $C_4$-$C_{40}$ polyenyl group, a $C_2$-$C_{40}$ ketone group, a $C_2$-$C_{40}$ ester group, a $C_6$-$C_{18}$ aryl group, a $C_6$-$C_{40}$ alkylaryl group, a $C_6$-$C_{40}$ arylalkyl group, a $C_4$-$C_{40}$ cycloalkyl group, a $C_4$-$C_{40}$ cycloalkenyl group, and the like.

Preferred among the foregoing groups are a $C_1$-$C_{20}$ alkyl group, a $C_1$-$C_{20}$ fluoroalkyl group, a $C_2$-$C_{20}$ alkenyl group, a $C_2$-$C_{20}$ alkynyl group, a $C_3$-$C_{20}$ allyl group, a $C_4$-$C_{20}$ alkyldienyl group, a $C_2$-$C_{20}$ ketone group, a $C_2$-$C_{20}$ ester group, a $C_6$-$C_{12}$ aryl group, and a $C_4$-$C_{20}$ polyenyl group, respectively. Also included are combinations of groups having carbon atoms and groups having heteroatoms, such as e.g. an alkynyl group, preferably ethynyl, that is substituted with a silyl group, preferably a trialkylsilyl group.

The terms "aryl" and "heteroaryl" as used herein preferably mean a mono-, bi- or tricyclic aromatic or heteroaromatic group with 4 to 18 ring C atoms that may also comprise condensed rings and is optionally substituted with one or more groups L, wherein L is selected from halogen, -CN, -NC,-NCO, -NCS, -OCN, -SCN, $-C(=O)NR^0R^{00}$, $-C(=O)X^0$, $-C(=O)R^0$, $-NH_2$,$-NR^0R^{00}$, -SH, $-SR^0$, $-SO_3H$, $-SO_2R^0$, -OH, $-NO_2$, $-CF_3$, $-SF_5$, optionally substituted silyl, or organyl or organoheteryl with 1 to 40 C atoms that is optionally substituted and optionally comprises one or more heteroatoms, and is preferably alkyl, alkoxy, thiaalkyl, alkylcarbonyl, alkoxycarbonyl or alkoxycarbonyloxy with 1 to 20 C atoms that is optionally fluorinated, and $R^0$, $R^{00}$ and $X^0$ have the meanings as given below.

Very preferred substituents L are selected from halogen, most preferably F, or alkyl, alkoxy, oxaalkyl, thioalkyl, fluoroalkyl and fluoroalkoxy with 1 to 12 C atoms or alkenyl, and alkynyl with 2 to 12 C atoms.

Especially preferred aryl and heteroaryl groups are phenyl, pentafluorophenyl, phenyl wherein one or more CH groups are replaced by N, naphthalene, thiophene, selenophene, thienothiophene, dithienothiophene, fluorene and oxazole, all of which can be unsubstituted, mono- or polysubstituted with L as defined above. Very preferred rings are selected from pyrrole, preferably N-pyrrole, furan, pyridine, preferably 2- or 3-pyridine, pyrimidine, pyridazine, pyrazine, triazole, tetrazole, pyrazole, imidazole, isothiazole, thiazole, thiadiazole, isoxazole, oxazole, oxadiazole, thiophene, preferably 2-thiophene, selenophene, preferably 2-selenophene, thieno[3,2-b]thiophene, thieno[2,3-b]thiophene, furo[3,2-b]furan, furo[2,3-b]furan, seleno[3,2-b]selenophene, seleno[2,3-b]selenophene, thieno[3,2-b]selenophene, thieno[3,2-b]furan, indole, isoindole, benzo[b]furan, benzo[b]thiophene, benzo[1,2-b;4,5-b']dithiophene, benzo[2,1-b;3,4-b']dithiophene, quinole, 2- methylquinole, isoquinole, quinoxaline, quinazoline, benzotriazole, benzimidazole, benzothiazole, benzisothiazole, benzisoxazole, benzoxadiazole, benzoxazole, benzothiadiazole, all of which can be unsubstituted, mono- or polysubstituted with L as defined above. Further examples of aryl and heteroaryl groups are those selected from the groups shown hereinafter.

An alkyl or alkoxy radical, i.e. where the terminal $CH_2$ group is replaced by - O-, can be straight-chain or branched-chain. It is preferably straight-chain (or linear). Suitable examples of such alkyl and alkoxy radical are methyl, ethyl, propyl, butyl, pentyl, hexyl, heptyl, octyl, nonyl, decyl, undecyl, dodecyl, tridecyl, tetradecyl, pentadecyl, methoxy, ethoxy, propoxy, butoxy, pentoxy, hexoxy, heptoxy, octoxy, nonoxy, decoxy, undecoxy, dodecoxy, tridecoxy or tetradecoxy. Preferred alkyl and alkoxy radicals have 1, 2, 3, 4, 5, 6, 7, 8, 9 or 10 carbon atoms. Suitable examples of such preferred alkyl and alkoxy radicals may be selected from the group consisting of methyl, ethyl, propyl, butyl, pentyl, hexyl, heptyl, octyl, nonyl, decyl, methoxy, ethoxy, propoxy, butoxy, pentoxy, hexoxy, heptoxy, octoxy, nonoxy and decoxy.

An alkenyl group, wherein one or more $CH_2$ groups are replaced by-CH=CH- can be straight-chain or branched-chain. It is preferably straight-chain, has 2 to 10 C atoms and accordingly is preferably vinyl, prop-1-enyl, or prop-2-enyl, but-1-enyl, but-2-enyl or but-3-enyl, pent-1-enyl, pent-2-enyl, pent-3-enyl or pent-4-enyl, hex-1-enyl, hex-2-enyl, hex-3-enyl, hex-4-enyl or hex-5-enyl, hept-1-enyl, hept-2-enyl, hept-3-enyl, hept-4-enyl, hept-5-enyl or hept-6-enyl, oct-1-enyl, oct-2-enyl, oct-3-enyl, oct-4-enyl, oct-5-enyl, oct-6-enyl or oct-7-enyl, non-1-enyl, non-2-enyl, non-3-enyl, non-4-enyl, non-5-enyl, non-6-enyl, non-7-enyl or non-8-enyl, dec-1-enyl, dec-2-enyl, dec-3-enyl, dec-4-enyl, dec-5-enyl, dec-6-enyl, dec-7-enyl, dec-8-enyl or dec-9-enyl.

Especially preferred alkenyl groups are $C_2$-$C_7$-1E-alkenyl, $C_4$-$C_7$-3E-alkenyl, $C_5$-$C_7$-4-alkenyl, $C_6$-$C_7$-5-alkenyl and $C_7$-6-alkenyl, in particular $C_2$-$C_7$-1E-alkenyl, $C_4$-$C_7$-3E-alkenyl and $C_5$-$C_7$-4-alkenyl. Examples for particularly preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl, 6-heptenyl and the like. Alkenyl groups having up to 5 C atoms are generally preferred.

An oxaalkyl group, i.e. where one $CH_2$ group is replaced by -O-, is preferably straight-chain 2-oxapropyl (= methoxymethyl), 2-(ethoxymethyl) or 3-oxabutyl (= 2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example. Oxaalkyl, i.e. where one $CH_2$ group is replaced by -O-, is preferably straight-chain 2-oxapropyl (= methoxymethyl), 2- (= ethoxymethyl) or 3-oxabutyl (= 2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-, 7-, 8- or 9-oxadecyl, for example.

In an alkyl group wherein one $CH_2$ group is replaced by -O- and one by-C(O)-, these radicals are preferably neighbored. Accordingly these radicals together form a carbonyloxy group -C(O)-O- or an oxycarbonyl group -O-C(O)-. Preferably this group is straight-chain and has 2 to 6 C atoms. It is accordingly preferably selected from the group consisting of acetyloxy, propionyloxy, butyryloxy, pentanoyloxy, hexanoyloxy, acetyloxymethyl, propionyloxymethyl, butyryloxymethyl, pentanoyloxymethyl, 2-acetyloxyethyl, 2-propionyloxyethyl, 2-butyryloxyethyl, 3-acetyloxypropyl, 3-propionyloxypropyl, 4-acetyloxybutyl, methoxycarbonyl, ethoxycarbonyl, propoxycarbonyl, butoxycarbonyl, pentoxycarbonyl, methoxycarbonylmethyl, ethoxycarbonylmethyl, propoxycarbonylmethyl, butoxycarbonylmethyl, 2-(methoxycarbonyl)ethyl, 2-(ethoxycarbonyl)ethyl, 2-(propoxycarbonyl)ethyl, 3-(methoxycarbonyl)propyl, 3-(ethoxycarbonyl)propyl, and 4-(methoxycarbonyl)-butyl.

An alkyl group wherein two or more $CH_2$ groups are replaced by -O- and/or -C(O)O- can be straight-chain or branched-chain. It is preferably straight-chain and has 3 to 12 C atoms. Accordingly it is preferably selected from the group consisting of bis-carboxy-methyl, 2,2-bis-carboxy-ethyl, 3,3-bis-carboxy-propyl, 4,4-bis-carboxy-butyl, 5,5-bis-carboxy-pentyl, 6,6-bis-carboxy-hexyl, 7,7-bis-carboxy-heptyl, 8,8-bis-carboxy-octyl, 9,9-bis-carboxy-nonyl, 10,10-bis-carboxy-decyl, bis-(methoxycarbonyl)-methyl, 2,2-bis-(methoxycarbonyl)-ethyl, 3,3-bis-(methoxycarbonyl)-propyl, 4,4-bis-(methoxycarbonyl)-butyl, 5,5-bis-(methoxycarbonyl)-pentyl, 6,6-bis-(methoxycarbonyl)-hexyl, 7,7-bis-(methoxycarbonyl)-heptyl, 8,8-bis-(methoxycarbonyl)-octyl, bis-(ethoxycarbonyl)-methyl, 2,2-bis-(ethoxycarbonyl)-ethyl, 3,3-bis-(ethoxycarbonyl)-propyl, 4,4-bis-(ethoxycarbonyl)-butyl, and 5,5-bis-(ethoxycarbonyl)-hexyl.

A thioalkyl group, i.e. where one $CH_2$ group is replaced by -S-, is preferably straight-chain thiomethyl ($-SCH_3$), 1-thioethyl ($-SCH_2CH_3$), 1-thiopropyl ($=-SCH_2CH_2CH_3$), 1- (thiobutyl), 1-(thiopentyl), 1-(thiohexyl), 1-(thioheptyl), 1-(thiooctyl), 1-(thiononyl), 1-(thiodecyl), 1-(thioundecyl) or 1-(thiododecyl), wherein preferably the $CH_2$ group adjacent to the $sp^2$ hybridised vinyl carbon atom is replaced.

A fluoroalkyl group is preferably perfluoroalkyl, $C_iF_{2i+1}$, wherein i is an integer from 1 to 15, in particular $CF_3$, $C_2F_5$, $C_3F_7$, $C_4F_9$, $C_5F_{11}$, $C_6F_{13}$, $C_7F_{15}$ or $C_8F_{17}$, very preferably $C_6F_{13}$, or partially fluorinated alkyl, in particular 1,1-difluoroalkyl, all of which are straight-chain or branched-chain.

Alkyl, alkoxy, alkenyl, oxaalkyl, thioalkyl, carbonyl and carbonyloxy groups can be achiral or chiral groups. Particularly preferred chiral groups are 2-butyl (=1-methylpropyl), 2-methylbutyl, 2-methylpentyl, 3-methylpentyl, 2-ethylhexyl, 2-propylpentyl, in particular 2-methylbutyl, 2-methylbutoxy, 2-methylpentoxy, 3-methylpentoxy, 2-ethyl-hexoxy, 1-methylhexoxy, 2-octyloxy, 2-oxa-3-methylbutyl, 3-oxa-4-methyl-pentyl, 4-methylhexyl, 2-hexyl, 2-octyl, 2-nonyl, 2-decyl, 2-dodecyl, 6-meth-oxyoctoxy, 6-methyloctoxy, 6-methyloctanoyloxy, 5-methylheptyloxy-carbonyl, 2-methylbutyryloxy, 3-methylvaleroyloxy, 4-methylhexanoyloxy, 2-chloropropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy for example. Very preferred are 2-hexyl, 2-octyl, 2-octyloxy, 1,1,1-trifluoro-2-hexyl, 1,1,1-trifluoro-2-octyl and 1,1,1-trifluoro-2-octyloxy.

Preferred achiral branched groups are isopropyl, isobutyl (= methylpropyl), isopentyl (= 3-methylbutyl), tert. butyl, isopropoxy, 2-methyl-propoxy and 3-methylbutoxy.

In a preferred embodiment, the organyl and organoheteryl groups are independently of each other selected from primary, secondary or tertiary alkyl or alkoxy with 1 to 30 C atoms, wherein one or more H atoms are optionally replaced by F, or aryl, aryloxy, heteroaryl or heteroaryloxy that is optionally alkylated or alkoxylated and has 4 to 30 ring atoms. Very preferred groups of this type are selected from the group consisting of the following formulae

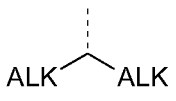
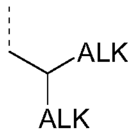
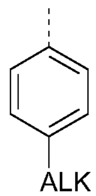
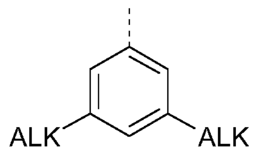

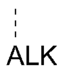
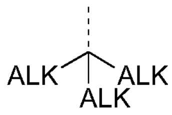
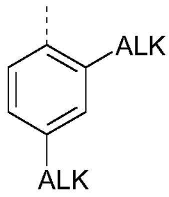
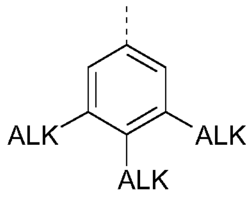

wherein "ALK" denotes optionally fluorinated, preferably linear, alkyl or alkoxy with 1 to 20, preferably 1 to 12 C-atoms, in case of tertiary groups very preferably 1 to 9 C atoms, and the dashed line denotes the link to the ring to which these groups are attached. Especially preferred among these groups are those wherein all ALK subgroups are identical.

As used herein, "halogen" includes F, Cl, Br or I, preferably F, Cl or Br, more preferably F and Cl, and most preferably F.

For the purposes of the present application the term "substituted" is used to denote that one or more hydrogen present is replaced by a group $R^S$ as defined herein.

$R^S$ is at each occurrence independently selected from the group consisting of any group $R^T$ as defined herein, organyl or organoheteryl having from 1 to 40 carbon atoms wherein the organyl or organoheteryl may be further substituted with one or more groups $R^T$ and organyl or organoheteryl having from 1 to 40 carbon atoms comprising one or more heteroatoms selected from the group consisting of N, O, S, P, Si, Se, As, Te, Ge, F and Cl, with N, O and S being preferred heteroatoms, wherein the organyl or organoheteryl may be further substituted with one or more groups $R^T$.

Preferred examples of organyl or organoheteryl suitable as $R^S$ may at each occurrence be independently selected from phenyl, phenyl substituted with one or more groups $R^T$, alkyl and alkyl substituted with one or more groups $R^T$, wherein the alkyl has at least 1, preferably at least 5, more preferably at least 10 and most preferably at least 15 carbon atoms and/or has at most 40, more preferably at most 30, even more preferably at most 25 and most preferably at most 20 carbon atoms. It is noted that for example alkyl suitable as $R^S$ also includes fluorinated alkyl, i.e. alkyl wherein one or more hydrogen is replaced by fluorine, and perfluorinated alkyl, i.e. alkyl wherein all of the hydrogen are replaced by fluorine.

$R^T$ is at each occurrence independently selected from the group consisting of F, Br, Cl, -CN, -NC, -NCO, -NCS, -OCN, -SCN, $-C(O)NR^0R^{00}$, $-C(O)X^0$,$-C(O)R^0$, $-NH_2$, $-NR^0R^{00}$, -SH, $-SR^0$, $-SO_3H$, $-SO_2R^0$, -OH, $-OR^0$, $-NO_2$, $-SF_5$ and $-SiR^0R^{00}R^{000}$. Preferred $R^T$ are selected from the group consisting of F, Br, Cl, -CN, -NC, -NCO, -NCS, -OCN, -SCN, $-C(O)NR^0R^{00}$, $-C(O)X^0$,$-C(O)R^0$, $-NH_2$, $-NR^0R^{00}$, -SH, $-SR^0$, -OH, $-OR^0$ and $-SiR^0R^{00}R^{000}$.

$R^0$, $R^{00}$ and $R^{000}$ are at each occurrence independently of each other selected from the group consisting of H, F, organyl or organoheteryl having from 1 to 40 carbon atoms. Said organyl or organoheteryl preferably have at least 5, more preferably at least 10 and most preferably at least 15 carbon atoms. Said organyl or organoheteryl preferably have at most 30, even more preferably at most 25 and most preferably at most 20 carbon atoms. Preferably, $R^0$, $R^{00}$ and $R^{000}$ are at each occurrence independently of each other selected from the group consisting of H, F, alkyl, fluorinated alkyl, alkenyl, alkynyl, phenyl and fluorinated phenyl. More preferably, $R^0$, $R^{00}$ and $R^{000}$ are at each occurrence independently of each other selected from the group consisting of H, F, alkyl, fluorinated, preferably perfluorinated, alkyl, phenyl and fluorinated, preferably perfluorinated, phenyl.

It is noted that for example alkyl suitable as $R^0$, $R^{00}$ and $R^{000}$ also includes perfluorinated alkyl, i.e. alkyl wherein all of the hydrogen are replaced by fluorine. Examples of alkyls may be selected from the group consisting of methyl, ethyl, n-propyl, iso-propyl, n-butyl, iso-butyl, tert-butyl (or "t-butyl"), pentyl, hexyl, heptyl, octyl, nonyl, decyl, undecyl, dodecyl, tridecyl, tetradecyl, pentadecyl, hexadecyl, heptadecyl, octadecyl, nonadecyl and eicosyl ($-C_{20}H_{41}$).

$X^0$ is a halogen. Preferably $X^0$ is selected from the group consisting of F, Cl and Br.

The present invention relates to a crosslinkable polymer formulation comprising a polymer containing a repeating unit $M^1$, wherein $M^1$ is a silazane unit; and a curing catalyst, wherein the curing catalyst is represented by formula (1): $ML_3$ (formula (1)), wherein M is boron; and L may be the same or different at each occurrence and is selected independently from the group consisting of hydrogen, straight-chain alkyl having 1 to 20 carbon atoms, straight-chain alkenyl having 2 to 20 carbon atoms, branched-chain alkyl or alkenyl having 3 to 20 carbon atoms, cyclic alkyl or alkenyl having 3 to 20 carbon atoms, and aryl or heteroaryl having 4 to 18 carbon atoms, wherein one or more hydrogen atoms may be optionally replaced by F.

Preferably, the polymer contains a repeating unit $M^1$ and a further repeating unit $M^2$, wherein $M^1$ and $M^2$ are silazane units which are different from each other. Preferably, the polymer contains a repeating unit $M^1$ and a further repeating unit $M^3$, wherein $M^1$ is a silazane unit and $M^3$ is a siloxazane unit. More preferably, the polymer contains a repeating unit $M^1$, a further repeating unit $M^2$ and a further repeating unit $M^3$, wherein $M^1$ and $M^2$ are silazane units which are different from each other and $M^3$ is a siloxazane unit.

In a preferred embodiment the polymer is a polysilazane which may be a perhydropolysilazane or an organopolysilazane. Preferably, the polysilazane contains a repeating unit $M^1$ and optionally a further repeating unit $M^2$, wherein

$M^1$ and $M^2$ are silazane units which are different from each other.

In an alternative preferred embodiment the polymer is a polysiloxazane which may be a perhydropolysiloxazane or an organopolysiloxazane. Preferably, the polysiloxazane contains a repeating unit $M^1$ and a further repeating unit $M^3$, wherein $M^1$ is a silazane unit and $M^3$ is a siloxazane unit. More preferably, the polysiloxazane contains a repeating unit $M^1$, a further repeating unit $M^2$ and a further repeating unit $M^3$, wherein $M^1$ and $M^2$ are silazane units which are different from each other and $M^3$ is a siloxazane unit.

In a particularly preferred embodiment the polymer is a mixture of a polysilazane which may be a perhydropolysilazane or an organopolysilazane and a polysiloxazane which may be a perhydropolysiloxazane or an organopolysiloxazane.

As noted above, one component of the crosslinkable polymeric composition according to the present invention is a polymer containing a silazane repeating unit $M^1$. Preferably, the silazane repeating unit $M^1$ is represented by formula (I):

$$-[-SiR^1R^2-NR^3-]- \qquad (I)$$

wherein $R^1$, $R^2$ and $R^3$ are independently from each other selected from the group consisting of hydrogen, organyl and organoheteryl.

It is preferred that $R^1$, $R^2$ and $R^3$ in formula (I) are independently from each other selected from the group consisting of hydrogen, alkyl having 1 to 40 carbon atoms, alkenyl having 2 to 40 carbon atoms and aryl having from 6 to 30 carbon atoms. More preferably, $R^1$, $R^2$ and $R^3$ are independently from each other selected from the group consisting of hydrogen, alkyl having 1 to 20 carbon atoms, alkenyl having 2 to 20 carbon atoms and phenyl. Most preferably, $R^1$, $R^2$ and $R^3$ are independently from each other hydrogen, methyl or vinyl.

In a preferred embodiment, the polymer contains besides the silazane repeating unit $M^1$ a further repeating unit $M^2$ which is represented by formula (II):

$$-[-SiR^4R^5-NR^6-]- \qquad (II)$$

wherein $R^4$, $R^5$ and $R^6$ are at each occurrence independently from each other selected from the group consisting of hydrogen, organyl and organoheteryl; and wherein $M^2$ is different from $M^1$.

It is preferred that $R^4$, $R^5$ and $R^6$ in formula (II) are independently from each other selected from the group consisting of hydrogen, alkyl having 1 to 40 carbon atoms, alkenyl having 2 to 40 carbon atoms and aryl having from 6 to 30 carbon atoms. More preferably, $R^4$, $R^5$ and $R^6$ are independently from each other selected from the group consisting of hydrogen, alkyl having 1 to 20 carbon atoms, alkenyl having 2 to 20 carbon atoms and phenyl. Most preferably, $R^4$, $R^5$ and $R^6$ are independently from each other hydrogen, methyl or vinyl.

In a further preferred embodiment, the polymer is a polysiloxazane which contains besides the silazane repeating unit $M^1$ a further repeating unit $M^3$ which is represented by formula (III):

$$-[-SiR^7R^8-[O-SiR^7R^8-]_a-NR^9-]- \qquad (III)$$

wherein $R^7$, $R^8$, $R^9$ are independently from each other selected from the group consisting of hydrogen, organyl and organoheteryl; and a is an integer from 1 to 60, preferably from 1 to 50. More preferably, a may be an integer from 5 to 50 (long chain monomer $M^3$); or a may be an integer from 1 to 4 (short chain monomer $M^3$).

It is preferred that $R^7$, $R^8$ and $R^9$ in formula (III) are independently from each other selected from the group consisting of hydrogen, alkyl having 1 to 40 carbon atoms, alkenyl having 2 to 40 carbon atoms and aryl having from 6 to 30 carbon atoms. More preferably, $R^7$, $R^8$ and $R^9$ are independently from each other selected from the group consisting of hydrogen, alkyl having 1 to 20 carbon atoms, alkenyl having 2 to 20 carbon atoms and phenyl. Most preferably, $R^7$, $R^8$ and $R^9$ are independently from each other hydrogen, methyl or vinyl.

With respect to $R^1$, $R^2$, $R^3$, $R^4$, $R^5$, $R^6$, $R^7$, $R^8$ and $R^9$ preferred organyl groups may be independently selected from the group consisting of alkyl, substituted alkyl, cycloalkyl, substituted cycloalkyl, alkenyl, substituted alkenyl, alkadienyl, substituted alkadienyl, alkynyl, substituted alkynyl, aryl, and substituted aryl.

With respect to $R^1$, $R^2$, $R^3$, $R^4$, $R^5$, $R^6$, $R^7$, $R^8$ and $R^9$ more preferred organyl groups be independently selected from the group consisting of alkyl, substituted alkyl, cycloalkyl, substituted cycloalkyl, alkenyl, substituted alkenyl, alkadienyl and substituted alkadienyl.

With respect to $R^1$, $R^2$, $R^3$, $R^4$, $R^5$, $R^6$, $R^7$, $R^8$ and $R^9$ even more preferred organyl groups may be independently selected from the group consisting of alkyl, substituted alkyl, alkenyl, substituted alkenyl, alkadienyl and substituted alkadienyl.

With respect to $R^1$, $R^2$, $R^3$, $R^4$, $R^5$, $R^6$, $R^7$, $R^8$ and $R^9$ still even more preferred organyl groups may be independently selected from the group consisting of alkyl and substituted alkyl.

With respect to $R^1$, $R^2$, $R^3$, $R^4$, $R^5$, $R^6$, $R^7$, $R^8$ and $R^9$ most preferred organyl groups may be independently selected from alkyl.

With respect to $R^1$, $R^2$, $R^3$, $R^4$, $R^5$, $R^6$, $R^7$, $R^8$ and $R^9$ preferred alkyl may be selected from alkyls having at least 1 carbon atom and at most 40 carbon atoms, preferably at most 30 or 20 carbon atoms, more preferably at most 15 carbon atoms, still even more preferably at most 10 carbon atoms and most preferably at most 5 carbon atoms.

With respect to $R^1$, $R^2$, $R^3$, $R^4$, $R^5$, $R^6$, $R^7$, $R^8$ and $R^9$ alkyl having at least 1 carbon atom and at most 5 carbon atoms may be independently selected from the group consisting of methyl, ethyl, n-propyl, iso-propyl, n-butyl, iso-butyl, tert-butyl, n-pentyl, iso-pentyl (2,2-methyl-butyl) and neo-pentyl (2,2-dimethyl-propyl); preferably from the group consisting of methyl, ethyl, n-propyl and iso-propyl; more preferably from methyl or ethyl; and most preferably from methyl.

With respect to $R^1$, $R^2$, $R^3$, $R^4$, $R^5$, $R^6$, $R^7$, $R^8$ and $R^9$ preferred cycloalkyl may be selected from cycloalkyl having at least 3, preferably at least 4 and most preferably at least 5 carbon atoms. Preferred cycloalkyl may be selected from cycloalkyl having at most 30, preferably at most 25, more preferably at most 20, even more preferably at most 15, and most preferably at most 10 carbon atoms.

With respect to $R^1$, $R^2$, $R^3$, $R^4$, $R^5$, $R^6$, $R^7$, $R^8$ and $R^9$ preferred examples of cycloalkyl may be selected from the group consisting of cyclopentyl, cyclohexyl, cycloheptyl and cyclooctyl.

With respect to $R^1$, $R^2$, $R^3$, $R^4$, $R^5$, $R^6$, $R^7$, $R^8$ and $R^9$ preferred alkenyl may be selected from alkenyl having at least 2 carbon atoms and at most 20, more preferably at most 15, even more preferably at most 10, and most preferably at most 6 carbon atoms. Said alkenyl may comprise the C=C double bond at any position within the molecule; for example, the C=C double bond may be terminal or non-terminal.

With respect to $R^1$, $R^2$, $R^3$, $R^4$, $R^5$, $R^6$, $R^7$, $R^8$ and $R^9$ alkenyl having at least 2 and at most 10 carbon atoms may be vinyl or allyl, preferably vinyl.

With respect to $R^1$, $R^2$, $R^3$, $R^4$, $R^5$, $R^6$, $R^7$, $R^8$ and $R^9$ preferred alkadienyl may be selected from alkadienyl having at least 4 and at most 20, more preferably at most 15, even more preferably at most 10, and most preferably at most 6 carbon atoms. Said alkenyl may comprise the two C=C double bonds at any position within the molecule, provided that the two C=C double bonds are not adjacent to each other; for example, the C=C double bonds may be terminal or non-terminal.

With respect to $R^1$, $R^2$, $R^3$, $R^4$, $R^5$, $R^6$, $R^7$, $R^8$ and $R^9$ alkadienyl having at least 4 and at most 6 carbon atoms may, for example, be butadiene or hexadiene.

With respect to $R^1$, $R^2$, $R^3$, $R^4$, $R^5$, $R^6$, $R^7$, $R^8$ and $R^9$ preferred aryl may be selected from aryl having at least 6 carbon atoms, and at most 30, preferably at most 24 carbon atoms.

With respect to $R^1$, $R^2$, $R^3$, $R^4$, $R^5$, $R^6$, $R^7$, $R^8$ and $R^9$ preferred examples of aryl may be selected from the group consisting of phenyl, naphthyl, phenanthrenyl, anthracenyl, tetracenyl, benz[a]anthracenyl, pentacenyl, chrysenyl, benzo[a]pyrenyl, azulenyl, perylenyl, indenyl, fluorenyl and any of these wherein one or more (for example 2, 3 or 4) CH groups are replaced by N. Of these phenyl, naphthyl and any of these wherein one or more (for example 2, 3 or 4) CH groups are replaced by N. Phenyl is most preferred.

With respect to $R^1$, $R^2$, $R^3$, $R^4$, $R^5$, $R^6$, $R^7$, $R^8$ and $R^9$ preferred organoheteryl groups may be independently selected from the group consisting of alkoxy, alkylsilyl, alkylsilyloxy, alkylcarbonyloxy and alkoxycarbonyloxy, each of which is optionally substituted and has 1 to 40, preferably 1 to 20, more preferably 1 to 18 C atoms; optionally substituted aryloxy, arylsilyl and arylsilyloxy each of which has 6 to 40, preferably 6 to 20 C atoms; and alkylaryloxy, alkylarylsilyl, alkylarylsilyloxy, arylalkylsilyl, arylalkylsilyloxy, arylcarbonyl, aryloxycarbonyl, arylcarbonyloxy and aryloxycarbonyloxy, each of which is optionally substituted and has 7 to 40, preferably 7 to 20 C atoms, wherein all these groups do optionally contain one or more heteroatoms, preferably selected from N, O, S, P, Si, Se, As, Te, Ge, F and Cl. The organoheteryl group may be a saturated or unsaturated acyclic group, or a saturated or unsaturated cyclic group. Unsaturated acyclic or cyclic groups are preferred. Where the organoheteryl group is acyclic, the group may be straight-chain or branched-chain.

With respect to $R^1$, $R^2$, $R^3$, $R^4$, $R^5$, $R^6$, $R^7$, $R^8$ and $R^9$ further preferred organoheteryl groups may be selected from the organoheteryl groups as defined in the definitions above.

It is understood that the skilled person can freely combine the above-mentioned preferred and more preferred embodiments relating to the substituents $R^1$, $R^2$, $R^3$, $R^4$, $R^5$, $R^6$, $R^7$, $R^8$ and $R^9$ in the polymer in any desired way.

Preferably, the polymer is a copolymer such as a random copolymer or a block copolymer or a copolymer containing at least one random sequence section and at least one block sequence section. More preferably, the polymer is a random copolymer or a block copolymer.

Preferably, the polymers used in the present invention have a molecular weight $M_w$, as determined by GPC, of at least 1,000 g/mol, more preferably of at least 2,000 g/mol, even more preferably of at least 3,000 g/mol. Preferably, the molecular weight $M_w$ of the polymers is less than 100,000 g/mol. More preferably, the molecular weight $M_w$ of the polymers is in the range from 3,000 to 50,000 g/mol.

Preferably, the total content of the polymer in the crosslinkable polymer formulation is in the range from 1 to 99.5% by weight, preferably from 5 to 99.0% by weight.

In a preferred embodiment of the present invention L is at each occurrence selected independently from the group consisting of hydrogen, straight-chain alkyl having 1 to 12 carbon atoms, straight-chain alkenyl having 2 to 12 carbon atoms, branched-chain alkyl or alkenyl having 3 to 12 carbon atoms, cyclic alkyl or alkenyl having 3 to 12 carbon atoms, and aryl or heteroaryl having 4 to 10 carbon atoms, wherein one or more hydrogen atoms may be optionally replaced by F.

More preferably, L is at each occurrence selected independently from the group consisting of hydrogen, straight-chain alkyl having 1 to 10 carbon atoms, branched-chain alkyl having 3 to 10 carbon atoms, cyclic alkyl having 3 to 10 carbon atoms, and aryl or heteroaryl having 4 to 10 carbon atoms, wherein one or more hydrogen atoms may be optionally replaced by F.

Particularly preferably, L is at each occurrence selected independently from the group consisting of hydrogen, ethyl, propyl, butyl, pentyl, hexyl, heptyl, octyl, nonyl, decyl, cyclobutyl, cyclopentyl, cyclohexyl, cycloheptyl, cyclooctyl, cyclononyl, cyclodecyl, phenyl und naphthyl, which optionally may be partially of fully fluorinated.

Most preferably, L is at each occurrence selected independently from the group consisting of hydrogen, methyl, ethyl, n-propyl, iso-propyl, n-butyl, iso-butyl, sec-butyl, t-butyl, n-pentyl, 2-pentyl, 3-pentyl, 2-methylbutyl, 3-methylbutyl, 3-methylbut-2-yl, 2-methylbut-2-yl, 2,2-dimethylpropyl, n-hexyl, 2-hexyl, 3-hexyl, 2-methylpentyl, 3-methylpentyl, 4-methylpentyl, 2-methylpent-2-yl, 3-methylpent-2-yl, 2-methylpent-3-yl, 3-methylpent-3-yl, 2-ethylbutyl, 3-ethylbutyl, 2,3-dimethylbutyl, 2,3-dimethylbut-2-yl, 2,2-dimethylbutyl, n-heptyl, n-octyl, n-nonyl, n-decyl, phenyl and naphthyl, which optionally may be partially of fully fluorinated.

In a particularly preferred embodiment of the present invention the curing catalyst in the crosslinkable polymer formulation is selected from triarylboron compounds, more preferably from $B(C_6H_5)_3$ and $B(C_6F_5)_3$.

Preferably, the amount of the curing catalyst in the crosslinkable polymer formulation is ≤ 10 weight-%, more preferably ≤ 5.0 weight-%, and most preferably ≤ 1.00 weight-%. Preferred ranges for the amount of the curing catalyst in the crosslinkable polymer formulation are from 0.001 to 10 weight-%, more preferably from 0.001 to 5.0 weight-%, and most preferably from 0.001 to 1.00 weight-%.

Solvents suitable for the crosslinkable polymer formulation are, in particular, organic solvents which contain no water and also no reactive groups (such as hydroxyl groups or amine groups). These solvents are, for example, aliphatic or aromatic hydrocarbons, halogenated hydrocarbons, esters such as ethyl acetate or butyl acetate, ketones such as acetone or methyl ethyl ketone, ethers such as tetrahydrofuran or dibutyl ether, and also mono- and polyalkylene glycol dialkyl ethers (glymes), or mixtures of these solvents.

Preferably, the formulation may comprise one or more additives selected from the group consisting of nanoparticles, converters, viscosity modifiers, surfactants, additives influencing film formation, additives influencing evaporation behavior and cross-linkers. Most preferably, said formulation further comprises a converter. Nanoparticles may be selected from nitrides, titanates, diamond, oxides, sulfides, sulfites, sulfates, silicates and carbides which may be optionally surface-modified with a capping agent. Preferably, nanoparticles are materials having a particle diameter of < 100 nm, more preferably < 80 nm, even more preferably < 60 nm, even more preferably < 40 nm, and most more preferably < 20 nm. The particle diameter may be determined by any standard method known to the skilled person.

Furthermore, a method for preparing the crosslinkable formulation of the present invention is provided. In such method the polymer is mixed with the curing catalyst. In a preferred embodiment the curing catalyst is added to the polymer and then mixed. In an alternative preferred embodiment the polymer is added to the curing catalyst and then mixed. It is preferred that the formulation of the invention is prepared at ambient temperature. Ambient temperature refers to a temperature selected from the range of 20 to 25°C. However, the formulation may also be prepared at temperatures of > 25°C, preferably > 25°C to 50°C.

In addition, a method for crosslinking the crosslinkable formulation of the present invention is provided, wherein the method comprises the following steps:

(a) providing a crosslinkable polymer formulation according to the present invention; and
(b) curing said crosslinkable polymer formulation.

Preferably, the crosslinkable polymer formulation is provided in step (a) on a surface of a support by an application method for applying liquid formulations to a support. Such methods include, for example, a method of wiping with a cloth, a method of wiping with a sponge, spray coating, flow coating, roller coating, dip coating, slot coating, dispensing, screen printing, stencile printing or ink-jet printing. Further methods include, for example, blade, spray, gravure, dip, hot-melt, roller, slot-die, printing methods, spinning or any other method.

The crosslinkable polymer formulation of the invention can be applied onto the surfaces of various articles such as automobile bodies, automobile wheels, dentures, tombstones, the interior and exterior of a house, products used with water in toilets, kitchens, washrooms, bathtubs, etc., toilet stools, signboards, signs, plastic products, glass products, ceramic products, wood products, etc. or the surfaces of other articles, to form dense and hydrophilic coatings on the surfaces of these articles. The support materials, to which the crosslinkable polymer formulation of the invention is

applied and which form part of the article, include a wide variety of materials, for example metals such as iron, steel, silver, zinc, aluminum, nickel, titanium, vanadium, chromium, cobalt, copper, zirconium, niobium, molybdenum, ruthenium, rhodium, silicon, boron, tin, lead or manganese or alloys thereof provided, if necessary, with an oxide or plating film; and various kinds of plastics such as polymethyl methacrylate (PMMA), polyurethane, polyesters such as PET, polyallyldiglycol carbonate (PADC), polycarbonate, polyimide, polyamide, epoxy resin, ABS resin, polyvinyl chloride, polyethylene, polypropylene, polythiocyanate, POM and polytetrafluoroethylene, if necessary, in combination with a primer to enhance the adhesion to the said materials. Such primers are for instance silanes, siloxane, silazane to name only a few. If plastic materials are used, it could be advantageous to perform a pretreatment by flaming, corona or plasma treatment, this might improve the adhesion of the coating. Further support materials include glass, wood, ceramics, concrete, mortar, marble, brick, clay or fibers etc. These materials may be coated, if necessary, with lacquers, varnishes or paints such as polyurethane lacquers, acrylic lacquers and/or dispersion paints.

Sometimes adhesion promotors or primers should be added to improve the adhesion of the coating to the surface.

The crosslinked polymer formulation which is obtainable by the above method forms a rigid and dense coating excellent in adhesion to a support material and may form a coating excellent in corrosion resistance and anti-scratch properties and simultaneously excellent in characteristics such as long-lasting hydrophilic and anti-fouling effect, abrasion resistance, easy-to-clean properties, anti-scratch properties, corrosion resistance, sealing properties, chemical resistance, oxidation resistance, physical barrier effect, low shrinkage, UV-barrier effect, smoothening effect, durability effect, heat resistance, fire resistance and antistatic properties on the surfaces of various support materials.

The curing of the coating could be done under various conditions. A temperature range starting from room temperature up to very high temperature is possible. For example to convert organopolysil(ox)azanes to ceramic material for corrosion resistant coatings on metal substrates, temperatures higher than 1000°C are used. As an alternative to temperature curing, radiation curing by UV-light, visible light, IR radiation or other radiation sources is possible too. Some surfaces or substrates are damaged by rough conditions and therefore curing at ambient conditions is preferred. In some applications, for example coating of train wagons or buildings, only ambient condition curing is possible. Therefore there is a big need to develop formulations which can be cured under ambient conditions in a short time.

Generally coatings based on organopolysil(ox)azanes contain additional additives. For example surface active additives for better adhesion to surface, levelling of the surface, or to change properties of the surface by migrating to the surface during curing. Another purpose of surface active substances is to keep fillers homogenously dispersed in the formulation. Other additives are for example polymers. They could be used as rheological modifiers, e.g. thickener, to change the physical properties of the film: e.g. add flexibility, as crosslinking agents e.g. functional polymers with epoxy groups for faster and more efficient curing and functional polymers like fluorinated polymers or hydrophilic polymers to impart oleophobic, hydrophobic or hydrophilic properties. Other additives are fillers which can impart additional properties. For example, pigments for optical effects (color, refractive index, pearlescent effect), functional pigments for electrical and thermal conductivity, inorganic particles to reduce the thermal expansion which allows higher film thicknesses by reduced tendency of crack formation, hard particles for improved hardness or scratch resistance.

In addition to these components, technical coating formulations usually comprise one or more solvents.

Preferably, the curing in step (b) is carried out on a hot plate, in a furnace, or in a climate chamber. Alternatively, if articles such as trains, vehicles, ships, walls, buildings or articles of very large size are coated, the curing is preferably carried out under ambient conditions.

In a preferred embodiment, the curing in step (b) is carried out on a hot plate or in a furnace at a temperature selected from 0 to 300°C, more preferably from 10 to 250°C, particularly preferably from 15 to 200°C, and most preferably from the range of 20 to 180°C.

In an alternative preferred embodiment, the curing in step (b) is carried out in a climate chamber having a relative humidity in the range from 50 to 99%, more preferably from 60 to 95%, and most preferably from 80 to 90%, at a temperature selected from 10 to 95°C, more preferably from 20 to 95°C, and most preferably from 40 to 95°C.

In another alternative preferred embodiment, the curing in step (b) is carried out under ambient conditions.

Preferably, the curing time is from 0.1 to 24 h, more preferably from 0.5 to 16 h, still more preferably from 1 to 8 h and most preferably from 2 to 5 h, depending on the application thickness, the composition of the polymer, and the nature of the curing catalyst.

There is further provided a crosslinked polymer composition which is obtainable by the above method for crosslinking the crosslinkable polymer compositions.

There is further provided an article comprising the crosslinked polymer composition as a protective surface coating. The article can be made of any of the support materials mentioned above. Preferably, the protective surface coating is applied on an article made of metal, polymer, glass, wood, stone or concrete which may optionally have a primary coating underneath the protective surface coating.

It is further preferred that the crosslinkable polymer formulation is applied in step (i) as a layer in a thickness of 1 $\mu$m to 1 cm, more preferably of 10 $\mu$m to 1 mm to the support. In a preferred embodiment, the formulation is applied

as a thin layer having a thickness of 1 to 200 μm, more preferably of 5 to 150 μm and most preferably of 10 to 100 μm. In an alternative preferred embodiment, the formulation is applied as a thick layer having a thickness of 200 μm to 1 cm, more preferably of 200 μm to 5 mm and most preferably of 200 μm to 1 mm.

In case of spray coating a rather high dilution is needed, typically a spray coating formulation contains a total solvent content of 70-95 weight%. Since the solvent content in spray coating formulations is very high, spray coating formulations are very sensitive to the type of solvents. It is general knowledge that spray coating formulations are made of mixtures of high and low boiling solvents (e.g. Organic Coatings: Science and Technology, Z.W. Wicks et al., page 482, 3rd Edition (2007), John Wiley & Sons, Inc.).

The present invention is further illustrated by the examples following hereinafter which shall in no way be construed as limiting. The skilled person will acknowledge that various modifications, additions and alternations may be made to the invention without departing from the spirit and scope of the invention as defined in the appended claims.

**Examples**

**Example 1**

Organopolysilazane Durazane 1033 (silazane of structure (I), n : m = 33 : 67) (10 g) is mixed with a 10% solution of $B(C_6H_5)_3$ in THF (1g). The mixture is poured on a glass plate to form a film having a thickness of ca. 0.1-0.2 μm and stored at ambient conditions. A reference glass plate with a film obtained from a mixture of Organopolysilazane Durazane 1033 (10 g) and THF (1 g) (no catalyst) is prepared and stored in parallel. After 4 h the material containing the catalyst is dry to touch, while the reference material is still liquid. Both glass plates are heated on a hot plate at 150°C for 16 h and analyzed by FT-IR. The FT-IR spectra clearly show a higher degree of hydrolysis/crosslinking for the catalyst containing in comparison to the catalyst free material (see Figure 1).

(I) $-[-Si(CH_3)_2-NH-]_n-[-Si(CH_3)H-NH-]_m-$

**Example 2**

Perhydropolysilazane NN-120-20 (20 % silazane of structure (II) in di-n-butyl ether) (10 g) is mixed with a 10% solution of $B(C_6H_5)_3$ in THF (0.2 g). The mixture is poured on a glass plate to form a film having a thickness of ca. 0.1 μm and stored at ambient conditions. A reference glass plate with a film obtained from a mixture of Perhydropolysilazane (10 g) and THF (0.2 g) (no catalyst) is prepared and stored in parallel. After 4 h the material containing the catalyst is dry to touch, while the reference material is still liquid

(II) $-[-SiH_2-NH-]_n-$

**Example 3**

Use of polysiloxazanes in combination with a boron Lewis acid curing catalyst in technical coatings

Siloxazane 2020

A 4 l pressure vessel was charged with 1500 g of liquid ammonia at 0°C and a pressure of between 3 bar and 5 bar. A mixture of 442 g dichloromethylsilane and 384 g 1,3-dichlorotetramethyldisiloxane were slowly added over a period of 3 h. After stirring the resulting reaction mixture for an additional 3 h the stirrer was stopped and the lower phase was isolated and evaporated to remove dissolved ammonia. After filtration 429 g of a colorless viscous oil remained. 100 g of this oil were dissolved in 100 g 1,4-dioxane and cooled to 0°C. 100 mg KH were added and the reaction solution was stirred for 4 h, until gas formation stopped. 300 mg chlorotrimethylsilane and 250 g xylene were added and the temperature was raised to room temperature. The turbid solution was filtrated and the resulting clear solution was reduced to dryness at a temperature of 50°C under a vacuum of 20 mbar or less. 95 g of a colorless highly viscous oil of Siloxazane 2020 remained.

Siloxazane 2025

A 2 l flask was charged under nitrogen atmosphere with 1000 g n-heptane, 50 g dichloromethylsilane (available from Sigma-Aldrich) and 30 g silanol-terminated polydimethylsiloxane (molecular weight $M_n$ of 550 g/mol; available from

Sigma-Aldrich). At a temperature of 0°C ammonia was slowly bubbled through the solution for 6 h. Precipitation of ammonium chloride was observed. The solid ammonium chloride was removed by filtration, yielding a clear filtrate, from which the solvent was removed by evaporation under reduced pressure. 49 g of a colorless low viscous liquid of Siloxazane 2025 was obtained.

Preparation

Triphenylborane ($BPh_3$, 1 mol/l in dibutyl ether, available from Sigma Aldrich) is diluted with tert-butyl acetate or n-butyl acetate to a concentration of 5 weight-%. The catalyst solution is then mixed with the polysiloxazane in a ratio as shown in Table 1 and additional solvent using a dissolver (Disperlux) for 5 min at 500 rpm.

Table 1: Ratio of polysiloxazane and triphenylborane

| Amount [g] | Component |
|---|---|
| 80 | Siloxazane 2020 or Siloxazane 2025 |
| 20 | 5 % Triphenylborane catalyst solution in THF/n-butyl acetate |

Appl ication

The coatings are applied on the surface of a polypropylene and aluminum substrate. Prior to the coating process, the surfaces have to be cleaned with isopropanol to remove grease and dust. By doctor blade coating a layer of 3-4 μm thickness is applied on the substrates.

Evaluation

Then the substrates are stored at 22°C +/-1°C and a relative humidity of 50% +/-1%. The curing state is tested by touching the surface and checking the stickiness of the surface. The coating is regarded as fully cured, if it is no longer sticky. This state is called "DDT = dry-to-touch". In Table 2 the time period in minutes is shown until the DDT state is reached, for both substrates and both polysiloxazanes with and without catalyst.

Table 2: Curing conditions: 22°C and 50% relative humidity

| Polysiloxazane | Substrate | "Dry to touch" (DTT) time period [min] |
|---|---|---|
| A | Polypropylene | > 240 |
| A + Catalyst | Polypropylene | 30 |
| A | Aluminum | > 240 |
| A + Catalyst | Aluminum | 30 |
| B | Polypropylene | > 240 |
| B + Catalyst | Polypropylene | 45 |
| B | Aluminum | > 240 |
| B + Catalyst | Aluminum | 45 |

The results in Table 2 show that the catalyst accelerates the curing of the polysiloxazanes so that the curing time required for a particular result is reduced. The results further show that the curing speed is independent of the substrate.

In order to study the impact of the curing conditions, the curing of material B on the aluminum substrate is repeated in a climate chamber of 60°C and a relative humidity of 60% (see Table 3).

Table 3: Curing conditions: 60°C and 60% relative humidity

| Polysiloxazane | Substrate | "Dry to touch" (DTT) time period [min] |
|---|---|---|
| B | Aluminum | 190 |
| B + Catalyst | Aluminum | 15 |

At higher temperature and humidity, the curing of the formulation with and without catalyst is faster. However, the curing time of the formulation containing the catalyst is reduced by a factor of three when compared to the curing conditions shown in Table 2.

**Example 4**

Experiments with organopolysilazanes and filler

Materials

Material: Durazane 1033*, molecular weight 2,300 g/mol
Filler X: 5 μm glass powder (available from Schott AG)
Filler Y: Pigment (Iriotech)

Conditions

Condition I: ambient conditions, 25°C and controlled relative humidity of 50%
Condition II: open Hotplate of 85°C and controlled relative humidity of 50%
Condition III: climate chamber of 85°C and relative humidity of 85%

Catalyst: $BPh_3$ = Triphenylborane

Test procedure:

Durazane 1033 is mixed with the Catalyst in a weight ratio of 99.5 : 0.5.

Then, 70 weight-% of the filler material is added. As a reference, the pure Durazane 1033 and filler are used. A film of 100 μm thickness is applied on a glass plate by doctor-blade coating. The glass plate is stored under the Conditions I to III as described above and stickiness is checked repeatedly in fixed time intervals of at first minutes and then hours. Tables 4 to 6 indicate the shortest time in hours at which the coating is dry-to-touch.

Table 4: Conditions I

| Material | Filler | "Dry to touch" (DTT) time period [h] no catalyst | "Dry to touch" (DTT) time period [h] Catalyst |
|---|---|---|---|
| Durazane 1033 | X | > 24 | 3 |
| Durazane 1033 | Y | > 24 | 3 |

Table 5: Conditions II

| Material | Filler | "Dry to touch" (DTT) time period [h] no catalyst | Dry to touch" (DTT) time period [h] Catalyst 1 |
|---|---|---|---|
| Durazane 1033 | X | > 24 | 2 |
| Durazane 1033 | Y | > 24 | 2 |

Table 6: Conditions III

| Material | Filler | "Dry to touch" (DTT) time period [h] no catalyst | Dry to touch" (DTT) time period [h] Catalyst 1 |
|---|---|---|---|
| Durazane 1033 | X | 16 | <1 |
| Durazane 1033 | Y | 16 | <1 |

The results in Table 4 to 6 show the effect of the catalyst addition on the curing rate of organopolysilazane formulations containing filler particles.

## Claims

1. A crosslinkable polymer formulation comprising:

   a polymer containing a repeating unit $M^1$, wherein $M^1$ is a silazane repeating unit; and
   a curing catalyst, wherein the curing catalyst is represented by formula (1):

   $$ML_3 \qquad (1)$$

   wherein M is boron, and
   L may be the same or different at each occurrence and is selected independently from the group consisting of hydrogen, straight-chain alkyl having 1 to 20 carbon atoms, straight-chain alkenyl having 2 to 20 carbon atoms, branched-chain alkyl or alkenyl having 3 to 20 carbon atoms, cyclic alkyl or alkenyl having 3 to 20 carbon atoms, and aryl or heteroaryl having 4 to 18 carbon atoms, wherein one or more hydrogen atoms may be optionally replaced by F.

2. The crosslinkable polymer formulation according to claim 1,
   wherein $M^1$ is represented by formula (I):

   $$-[-SiR^1R^2-NR^3-]- \qquad (I)$$

   wherein $R^1$, $R^2$ and $R^3$ are independently from each other selected from the group consisting of hydrogen, organyl and organoheteryl.

3. The crosslinkable polymer formulation according to claim 2,
   wherein $R^1$, $R^2$ and $R^3$ are independently from each other selected from the group consisting of hydrogen, alkyl having 1 to 40 carbon atoms, alkenyl having 2 to 40 carbon atoms and aryl having from 6 to 30 carbon atoms.

4. The crosslinkable polymer formulation according to one or more of claims 1 to 3,
   wherein the polymer contains a further repeating unit $M^2$ which is represented by formula (II):

   $$-[-SiR^4R^5-NR^6-]- \qquad (II)$$

   wherein $R^4$, $R^5$ and $R^6$ are independently from each other selected from the group consisting of hydrogen, organyl and organoheteryl; and
   wherein $M^2$ is different from $M^1$.

5. The crosslinkable polymer formulation according to claim 4,
   wherein $R^4$, $R^5$ and $R^6$ are independently from each other selected from the group consisting of hydrogen, alkyl having 1 to 40 carbon atoms, alkenyl having 2 to 40 carbon atoms and aryl having from 6 to 30 carbon atoms.

6. The crosslinkable polymer formulation according to one or more of claims 1 to 5,
   wherein the polymer contains a further repeating unit $M^3$ which is represented by formula (III):

   $$-[-SiR^7R^8-[O-SiR^7R^8-]_a-NR^9-]- \qquad (III)$$

   wherein $R^7$, $R^8$, $R^9$ are independently from each other selected from the group consisting of hydrogen, organyl and organoheteryl; and
   a is an integer from 1 to 60.

7. The crosslinkable polymer formulation according to claim 6,
   wherein $R^7$, $R^8$ and $R^9$ are independently from each other selected from the group consisting of hydrogen, alkyl having 1 to 40 carbon atoms, alkenyl having 2 to 40 carbon atoms and aryl having 6 to 30 carbon atoms.

**8.** The crosslinkable polymer formulation according to one or more of claims 1 to 7, wherein L is at each occurrence selected independently from the group consisting of hydrogen, straight-chain alkyl having 1 to 12 carbon atoms, straight-chain alkenyl having 2 to 12 carbon atoms, branched-chain alkyl or alkenyl having 3 to 12 carbon atoms, cyclic alkyl or alkenyl having 3 to 12 carbon atoms, and aryl or heteroaryl having 4 to 10 carbon atoms, wherein one or more hydrogen atoms may be optionally replaced by F.

**9.** The crosslinkable polymer formulation according to one or more of claims 1 to 7, wherein L is at each occurrence selected independently from the group consisting of hydrogen, straight-chain alkyl having 1 to 10 carbon atoms, branched-chain alkyl having 3 to 10 carbon atoms, cyclic alkyl having 3 to 10 carbon atoms, and aryl or heteroaryl having 4 to 10 carbon atoms, wherein one or more hydrogen atoms may be optionally replaced by F.

**10.** The crosslinkable polymer formulation according to one or more of claims 1 to 9, wherein the formulation comprises one or more solvents.

**11.** A method for preparing a crosslinkable polymer formulation according to one or more of claims 1 to 10, wherein the polymer is mixed with the curing catalyst.

**12.** A method for crosslinking the crosslinkable polymer formulation according to one or more of claims 1 to 10, wherein the method comprises the following steps:

(a) providing a crosslinkable polymer formulation according to one or more of claims 1 to 10; and
(b) curing said crosslinkable polymer formulation.

**13.** The method according to claim 12, wherein the curing in step (b) is carried out on a hot plate or in a furnace at a temperature selected from 0 to 300°C, or in a climate chamber having a relative humidity in the range from 50 to 99% at a temperature selected from 10 to 95°C.

**14.** The method according to claim 12, wherein the curing in step (b) is carried out under ambient conditions.

**Patentansprüche**

**1.** Vernetzbare Polymerformulierung enthaltend:

ein Polymer enthaltend eine Wiederholungseinheit $M^1$, wobei $M^1$ eine Silazan-Wiederholungseinheit ist; und einen Härtungskatalysator, wobei der Härtungskatalysator dargestellt wird durch die Formel (1):

$$ML_3 \qquad (1)$$

wobei M Bor ist und
L bei jedem Auftreten gleich oder verschieden sein kann und unabhängig ausgewählt ist aus der Gruppe bestehend aus Wasserstoff, geradkettigem Alkyl mit 1 bis 20 Kohlenstoffatomen, geradkettigem Alkenyl mit 2 bis 20 Kohlenstoffatomen, verzweigtkettigem Alkyl oder Alkenyl mit 3 bis 20 Kohlenstoffatomen, cyclischem Alkyl oder Alkenyl mit 3 bis 20 Kohlenstoffatomen und Aryl oder Heteroaryl mit 4 bis 18 Kohlenstoffatomen, wobei gegebenenfalls ein oder mehrere Wasserstoffatome durch F ersetzt sein können.

**2.** Vernetzbare Polymerformulierung nach Anspruch 1, wobei $M^1$ dargestellt wird durch die Formel (I):

$$-[-SiR^1R^2-NR^3-]- \qquad (I)$$

wobei $R^1$, $R^2$ und $R^3$ unabhängig voneinander aus der Gruppe bestehend aus Wasserstoff, Organyl und Organoheteryl ausgewählt sind.

**3.** Vernetzbare Polymerformulierung nach Anspruch 2,
wobei $R^1$, $R^2$ und $R^3$ unabhängig voneinander aus der Gruppe bestehend aus Wasserstoff, Alkyl mit 1 bis 40 Kohlenstoffatomen, Alkenyl mit 2 bis 40 Kohlenstoffatomen und Aryl mit 6 bis 30 Kohlenstoffatomen ausgewählt sind.

**4.** Vernetzbare Polymerformulierung nach einem oder mehreren der Ansprüche 1 bis 3,
wobei das Polymer eine weitere Wiederholungseinheit $M^2$ enthält, die dargestellt wird durch die Formel (II):

$$-[-SiR^4R^5-NR^6-]- \qquad (II)$$

wobei $R^4$, $R^5$ und $R^6$ unabhängig voneinander aus der Gruppe bestehend aus Wasserstoff, Organyl und Organoheteryl ausgewählt sind und
wobei $M^2$ von $M^1$ verschieden ist.

**5.** Vernetzbare Polymerformulierung nach Anspruch 4,
wobei $R^4$, $R^5$ und $R^6$ unabhängig voneinander aus der Gruppe bestehend aus Wasserstoff, Alkyl mit 1 bis 40 Kohlenstoffatomen, Alkenyl mit 2 bis 40 Kohlenstoffatomen und Aryl mit 6 bis 30 Kohlenstoffatomen ausgewählt sind.

**6.** Vernetzbare Polymerformulierung nach einem oder mehreren der Ansprüche 1 bis 5,
wobei das Polymer eine weitere Wiederholungseinheit $M^3$ enthält, die dargestellt wird durch die Formel (III):

$$-[-SiR^7R^8-[O-SiR^7R^8-]_a-NR^9-]- \qquad (III)$$

wobei $R^7$, $R^8$, $R^9$ unabhängig voneinander aus der Gruppe bestehend aus Wasserstoff, Organyl und Organoheteryl ausgewählt sind und
a eine ganze Zahl von 1 bis 60 ist.

**7.** Vernetzbare Polymerformulierung nach Anspruch 6,
wobei $R^7$, $R^8$ und $R^9$ unabhängig voneinander aus der Gruppe bestehend aus Wasserstoff, Alkyl mit 1 bis 40 Kohlenstoffatomen, Alkenyl mit 2 bis 40 Kohlenstoffatomen und Aryl mit 6 bis 30 Kohlenstoffatomen ausgewählt sind.

**8.** Vernetzbare Polymerformulierung nach einem oder mehreren der Ansprüche 1 bis 7,
wobei L bei jedem Auftreten unabhängig ausgewählt ist aus der Gruppe bestehend aus Wasserstoff, geradkettigem Alkyl mit 1 bis 12 Kohlenstoffatomen, geradkettigem Alkenyl mit 2 bis 12 Kohlenstoffatomen, verzweigtkettigem Alkyl oder Alkenyl mit 3 bis 12 Kohlenstoffatomen, cyclischem Alkyl oder Alkenyl mit 3 bis 12 Kohlenstoffatomen und Aryl oder Heteroaryl mit 4 bis 10 Kohlenstoffatomen, wobei gegebenenfalls ein oder mehrere Wasserstoffatome durch F ersetzt sein können.

**9.** Vernetzbare Polymerformulierung nach einem oder mehreren der Ansprüche 1 bis 7,
wobei L bei jedem Auftreten unabhängig ausgewählt ist aus der Gruppe bestehend aus Wasserstoff, geradkettigem Alkyl mit 1 bis 10 Kohlenstoffatomen, verzweigtkettigem Alkyl mit 3 bis 10 Kohlenstoffatomen, cyclischem Alkyl mit 3 bis 10 Kohlenstoffatomen und Aryl oder Heteroaryl mit 4 bis 10 Kohlenstoffatomen, wobei gegebenenfalls ein oder mehrere Wasserstoffatome durch F ersetzt sein können.

**10.** Vernetzbare Polymerformulierung nach einem oder mehreren der Ansprüche 1 bis 9,
wobei die Formulierung ein oder mehrere Lösungsmittel enthält.

**11.** Verfahren zur Herstellung einer vernetzbaren Polymerformulierung nach einem oder mehreren der Ansprüche 1 bis 10,
wobei das Polymer mit dem Härtungskatalysator gemischt wird.

**12.** Verfahren zur Vernetzung der vernetzbaren Polymerformulierung nach einem oder mehreren der Ansprüche 1 bis 10, wobei das Verfahren die folgenden Schritte umfasst:

(a) Bereitstellen einer vernetzbaren Polymerformulierung nach einem oder mehreren Anbieter Ansprüche 1 bis 10 und
(b) Härten der vernetzbaren Polymerformulierung.

**13.** Verfahren nach Anspruch 12,

wobei die Härtung in Schritt (b) auf einer Heizplatte oder in einem Ofen bei einer aus 0 bis 300°C ausgewählten Temperatur oder in einer Klimakammer mit einer relativen Feuchte im Bereich von 50 bis 99% bei einer aus 10 bis 95°C ausgewählten Temperatur durchgeführt wird.

**14.** Verfahren nach Anspruch 12,
wobei die Härtung in Schritt (b) unter Umgebungsbedingungen durchgeführt wird.

**Revendications**

**1.** Formulation de polymère réticulable, comprenant :

un polymère contenant un motif répétitif $M^1$, où $M^1$ est un motif répétitif de silazane ; et
un catalyseur de durcissement, où le catalyseur de durcissement est représenté par la formule (1) :

$$ML_3 \qquad (1)$$

où M est bore, et
L peut être identique ou différent à chaque occurrence et est choisi indépendamment dans le groupe constitué par hydrogène, alkyle à chaîne linéaire ayant de 1 à 20 atomes de carbone, alcényle à chaîne linéaire ayant de 2 à 20 atomes de carbone, alkyle ou alcényle à chaîne ramifiée ayant de 3 à 20 atomes de carbone, alkyle ou alcényle cyclique ayant de 3 à 20 atomes de carbone, et aryle ou hétéroaryle ayant de 4 à 18 atomes de carbone, où un ou plusieurs atomes d'hydrogène peuvent éventuellement être remplacés par F.

**2.** Formulation de polymère réticulable selon la revendication 1,
dans laquelle $M^1$ est représenté par la formule (I) :

$$\text{-[-SiR}^1\text{R}^2\text{-NR}^3\text{-]-} \qquad (I)$$

où $R^1$, $R^2$ et $R^3$ sont choisis indépendamment les uns des autres dans le groupe constitué par hydrogène, organyle et organohétéryle.

**3.** Formulation de polymère réticulable selon la revendication 2,
dans laquelle $R^1$, $R^2$ et $R^3$ sont choisis indépendamment les uns des autres dans le groupe constitué par hydrogène, alkyle ayant de 1 à 40 atomes de carbone, alcényle ayant de 2 à 40 atomes de carbone et aryle ayant de 6 à 30 atomes de carbone.

**4.** Formulation de polymère réticulable selon l'une ou plusieurs parmi les revendications 1 à 3,
dans laquelle le polymère contient un autre motif répétitif $M^2$ qui est représenté par la formule (II) :

$$\text{-[-SiR}^4\text{R}^5\text{-NR}^6\text{-]-} \qquad (II)$$

où $R^4$, $R^5$ et $R^6$ sont choisis indépendamment les uns des autres dans le groupe constitué par hydrogène, organyle et organohétéryle ; et
où $M^2$ est différent de $M^1$.

**5.** Formulation de polymère réticulable selon la revendication 4,
dans laquelle $R^4$, $R^5$ et $R^6$ sont choisis indépendamment les uns des autres dans le groupe constitué par hydrogène, alkyle ayant de 1 à 40 atomes de carbone, alcényle ayant de 2 à 40 atomes de carbone et aryle ayant de 6 to 30 atomes de carbone.

**6.** Formulation de polymère réticulable selon l'une ou plusieurs parmi les revendications 1 à 5,
dans laquelle le polymère contient un autre motif répétitif $M^3$ qui est représenté par la formule (III) :

$$\text{-[-SiR}^7\text{R}^8\text{-[O-SiR}^7\text{R}^8\text{-]}_a\text{-NR}^9\text{-]-} \qquad (III)$$

où $R^7$, $R^8$, $R^9$ sont choisis indépendamment les uns des autres dans le groupe constitué par hydrogène, organyle et organohétéryle ; et
a est un nombre entier allant de 1 à 60.

**7.** Formulation de polymère réticulable selon la revendication 6,
dans laquelle $R^7$, $R^8$ et $R^9$ sont choisis indépendamment les uns des autres dans le groupe constitué par hydrogène, alkyle ayant de 1 à 40 atomes de carbone, alcényle ayant de 2 à 40 atomes de carbone et aryle ayant de 6 à 30 atomes de carbone.

**8.** Formulation de polymère réticulable selon l'une ou plusieurs parmi les revendications 1 à 7,
dans laquelle L est à chaque occurrence choisi indépendamment dans le groupe constitué par hydrogène, alkyle à chaîne linéaire ayant de 1 à 12 atomes de carbone, alcényle à chaîne linéaire ayant de 2 à 12 atomes de carbone, alkyle ou alcényle à chaîne ramifiée ayant de 3 à 12 atomes de carbone, alkyle ou alcényle cyclique ayant de 3 à 12 atomes de carbone, et aryle ou hétéroaryle ayant de 4 à 10 atomes de carbone, où un ou plusieurs atomes d'hydrogène peuvent éventuellement être remplacés par F.

**9.** Formulation de polymère réticulable selon l'une ou plusieurs parmi les revendications 1 à 7,
dans laquelle L est à chaque occurrence choisi indépendamment dans le groupe constitué par hydrogène, alkyle à chaîne linéaire ayant de 1 à 10 atomes de carbone, alkyle à chaîne ramifiée ayant de 3 à 10 atomes de carbone, alkyle cyclique ayant de 3 à 10 atomes de carbone, et aryle ou hétéroaryle ayant de 4 à 10 atomes de carbone, où un ou plusieurs atomes d'hydrogène peuvent éventuellement être remplacés par F.

**10.** Formulation de polymère réticulable selon l'une ou plusieurs parmi les revendications 1 à 9,
la formulation comprenant un ou plusieurs solvants.

**11.** Méthode de préparation d'une formulation de polymère réticulable selon l'une ou plusieurs parmi les revendications 1 à 10,
dans laquelle le polymère est mélangé avec le catalyseur de durcissement.

**12.** Méthode de réticulation de la formulation de polymère réticulable selon l'une ou plusieurs parmi les revendications 1 à 10,
la méthode comprenant les étapes suivantes :

(a) la mise à disposition d'une formulation de polymère réticulable selon l'une ou plusieurs parmi les revendications 1 à 10 ; et
(b) le durcissement de ladite formulation de polymère réticulable.

**13.** Méthode selon la revendication 12,
dans laquelle le durcissement dans l'étape (b) est effectué sur une plaque chauffante ou dans un four à une température sélectionnée pour aller de 0 à 300°C, ou dans une chambre climatisée ayant une humidité relative dans la plage allant de 50 à 99% à une température sélectionnée pour aller de 10 à 95°C.

**14.** Méthode selon la revendication 12, dans laquelle le durcissement dans l'étape (b) est effectué dans des conditions ambiantes.

# FIGURES

Figure 1

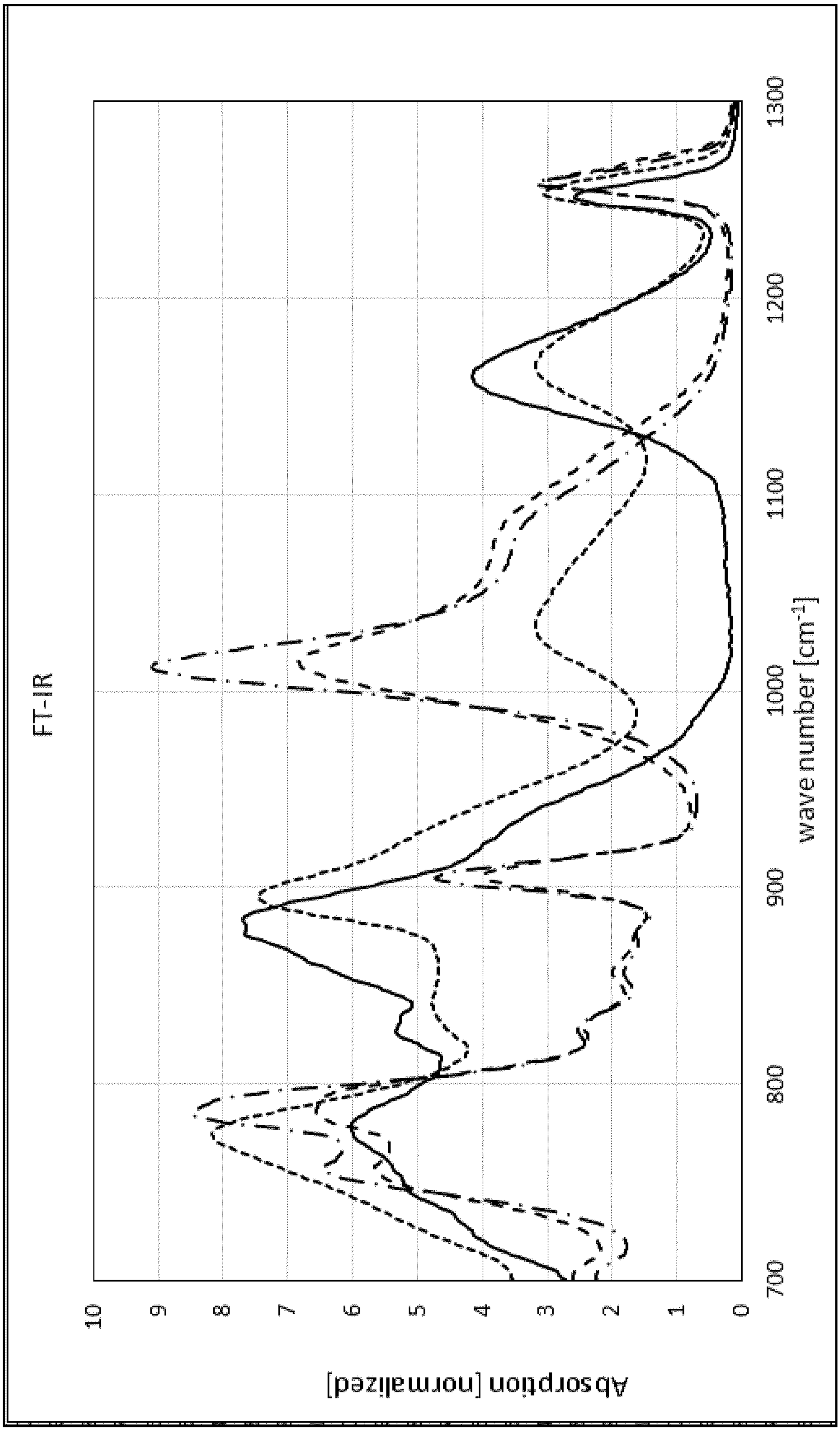

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007028511 A2
- WO 2004039904 A1
- WO 2007012392 A2
- US 2015030856 A1

### Non-patent literature cited in the description


- **Z.W. WICKS et al.** Organic Coatings: Science and Technology. John Wiley & Sons, Inc, 482